# EUROPÄISCHE PATENTSCHRIFT

(11) **EP 1 881 220 B1**
(45) Veröffentlichungstag und Bekanntmachung des Hinweises auf die Patenterteilung: **25.08.2010**
(21) Anmeldenummer: 07013647.8
(22) Anmeldetag: 12.07.2007
(51) Int. Cl.: F16D 13/64

(54) **Kupplungsscheibe für eine Reibungskupplung**
Clutch disc for a friction clutch
Disque d'embrayage pour un embrayage à friction

(30) Priorität: 20.07.2006 DE 102006033574; 04.07.2007 DE 102007031013
(43) Veröffentlichungstag der Anmeldung: 23.01.2008
(73) Patentinhaber: ZF Friedrichshafen AG, 88038 Friedrichshafen (DE)
(72) Erfinder: Tebbe, Gerhard, 97505 Geldersheim (DE)

(56) Entgegenhaltungen:
- DE-A1- 19 505 620
- DE-C1- 19 529 073
- US-A- 5 137 133
- US-A- 5 857 551

## Beschreibung

Die vorliegende Erfindung betrifft eine Kupplungsscheibe für eine Reibungskupplung, umfassend eine axial elastische Belagträgeranordnung und an beiden axialen Seiten der Belagträgeranordnung jeweils eine Reibbelagsanordnung.

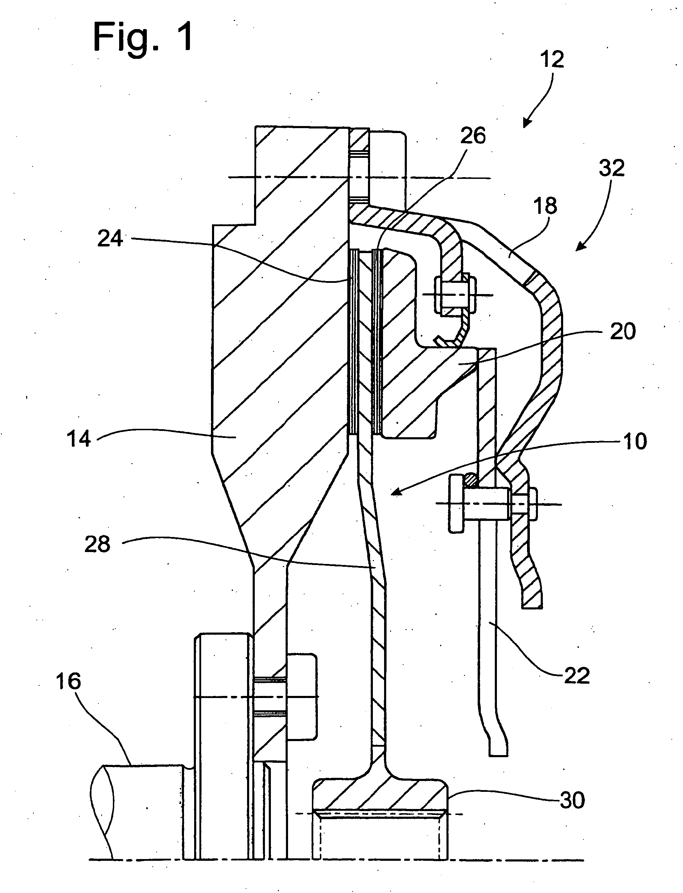

Eine derartige Kupplungsscheibe ist in prinzipieller Darstellung in Fig. 1 gezeigt. Man erkennt, dass diese Kupplungsscheibe 10 integriert ist in eine Reibungskupplung 12, die über eine als Schwungrad wirksame Widerlagerplatte 14 an eine Antriebswelle 16, beispielsweise die Kurbelwelle einer Brennkraftmaschine, angebunden ist. Radial außen ist mit der Widerlagerplatte 14 eine Druckplattenbaugruppe 32 im Bereich eines Kupplungsgehäuses 18 fest verbunden. Innerhalb des Kupplungsgehäuses 18 ist eine Anpressplatte 20 vorgesehen, die unter der Kraftbeaufschlagung einer Kraftbeaufschlagungsanordnung 22, hier beispielsweise als Membranfeder ausgebildet, steht. Diese Kraftbeaufschlagungsanordnung presst radial außen gegen die Anpressplatte und ist radial weiter innen am Gehäuse 18 abgestützt. Durch die Kraftbeaufschlagungsanordnung 22 wird die Anpressplatte 20 in Richtung auf die Widerlagerplatte 14 zu gepresst, so dass die Kupplungsscheibe 10 mit ihren an beiden axialen Seiten vorgesehenen Reibbelagsanordnungen 24, 26 eingespannt wird und damit ein Drehmoment über die Reibungskupplung 12 übertragen werden kann. Die Reibbelagsanordnungen 24, 26 sind entweder direkt oder beispielsweise über eine axial elastische Belagsfederung an einem Trägerring 28 getragen, der radial innen mit einem Nabenbereich 30 fest verbunden ist.

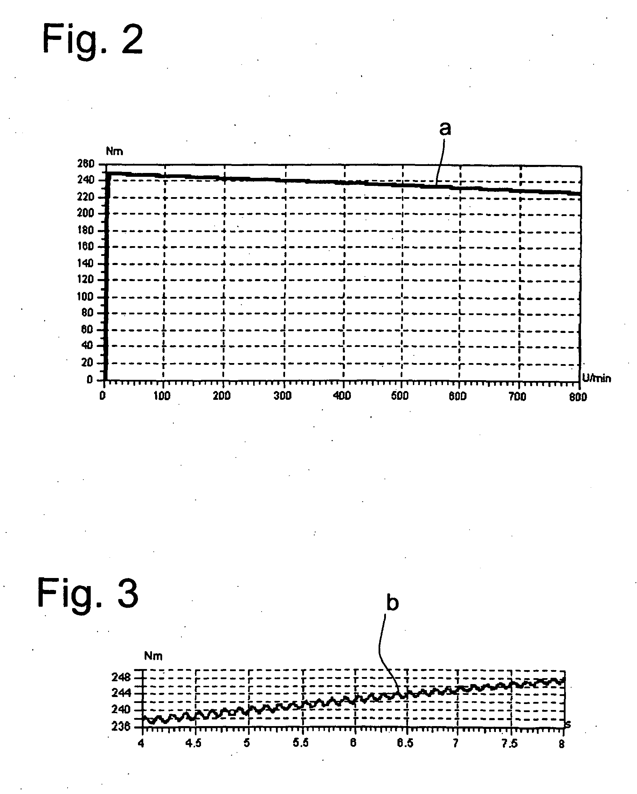

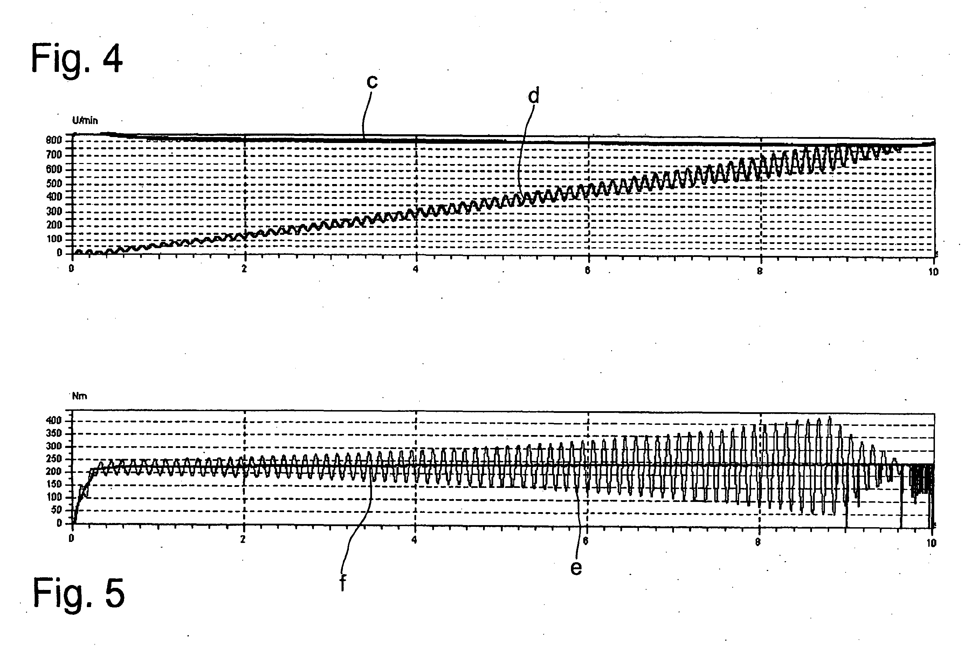

Bei derartigen Reibungskupplungen bzw. den dabei eingesetzten Kupplungsscheiben mit ihren Reibbelagsanordnungen ist es bekannt, dass der Reibkoeffizient der Reibbelagsanordnung variiert mit dem Kupplungsschlupf, also der Relativgeschwindigkeit, mit der eine jeweilige Reibbelagsanordnung sich bezüglich der damit in Reineingriff tretenden Komponente, also beispielsweise einer Widerlagerplatte oder einer Anpressplatte, bewegt. Diese Variation im Reibkoeffizienten führt zu einer entsprechenden schlupf- bzw. relativdrehzahlabhängigen Variation des über eine derartige Reibungskupplung dann übertragenen Kupplungsmomentes. Dies ist in Fig. 2 mit einer Kurve a verdeutlicht, welche das Kupplungsmoment, aufgetragen in Nm, über der Relativdrehzahl einer Kupplungsscheibe bezüglich der Anpressplatte bzw. der Widerlagerplatte einer Reibungskupplung darstellt. Man erkennt, dass hier mit zunehmender Relativdrehzahl das Kupplungsmoment abnimmt, was eine entsprechende Abnahme des Reibkoeffizienten voraussetzt. Bei Durchführen von Einkuppelvorgängen, also in Zuständen, in welchen die Relativdrehzahl zunächst vergleichsweise groß ist, bedeutet dies auf Grund des abnehmenden Schlupfs eine entsprechende Erhöhung des Kupplungsmomentes in Richtung Einrücken. Diese Variation des Kupplungsmomentes wiederum führt zu einer selbsterregten Schwingung der Kupplungsscheibe bezüglich der Anpressplatte bzw. der Widerlagerplatte, was sich in Fig. 3 bei Durchführung eines Einrückvorgangs anhand der Kurve b manifestiert. Man erkennt hier das über der Zeit aufgetragene Kupplungsmoment in einer Phase des Einrückvorgangs. Diese Oszillation des Kupplungsmoments führt zu einer entsprechenden Oszillation der Kupplungsscheibe, beispielsweise bezüglich der Widerlagerplatte 14, die in Fig. 4 aufgetragen ist. Hier erkennt man anhand der Kurve c die Drehzahl der Widerlagerplatte bei Durchführung eines Einkuppelvorgangs, die näherungsweise im Bereich von 800 Umdrehungen pro Minute liegt und auch bleibt. Die Drehzahl der Kupplungsscheibe nimmt ausgehend von einem Wert Null, also einem völlig entkoppelten Zustand und stehendem Fahrzeug, allmählich zu, überlagert mit einer durch die Kupplungsmomentenschwankung induzierten Drehzahlzunahme. Diese durch die Kurve d in Fig. 4 repräsentierte Oszillation der Kupplungsscheibe wiederum induziert in dem darauf folgenden Antriebsstrang eine durch die Kurve e in Fig. 5 repräsentierte Oszillation. Da die selbst erregte Schwingung im Bereich der Kupplungsscheibe, welche durch die Kurve d in Fig. 4 repräsentiert ist, hinsichtlich ihrer Schwingungsfrequenz primär beeinflusst ist durch die Eigenfrequenz des im Drehmomentenfluss folgenden Systems, im vorliegenden Falle also des Antriebsstrangs, entspricht die Schwingungsfrequenz der Kurve d im Wesentlichen also dieser Resonanzfrequenz des Antriebsstrangs, was dazu führt, dass, wie in Kurve e erkennbar, ein allmähliches Aufschaukeln der Oszillation des Antriebsstrangs, also eine so genannte Resonanzanregung, erzeugt wird. Diese Resonanzanregung endet im Prinzip erst dann, wenn die Kupplung nahezu vollständig eingerückt ist und mithin bei der Relativdrehzahl o aus der Kupplungsscheibe selbst heraus keine Schwingungsanregung mehr erfolgen kann. Es sei in diesem Zusammenhang noch darauf hingewiesen, dass in der Fig. 5 die Kurve f das über der Zeit ausgetragene Kupplungsmoment wiedergibt, das, wie anhand der Kurve b in Fig. 3 verdeutlicht, im Bereich von einigen Nm oszilliert. Diese Oszillation ist jedoch auf Grund des gewählten Maßstabs in Fig. 5 nicht erkennbar.

Eine Kupplungscheibe nach dem Oberbegriff des Anspruchs 1 ist aus US-A-5,857,551 bekannt.

Es ist die Aufgabe der vorliegenden Erfindung, eine Kupplungsscheibe für eine Reibungskupplung eines Fahrzeugs bereitzustellen, bei welcher die Gefahr von Schwingungsanregungen bei Durchführung von Betätigungsvorgängen deutlich gemindert ist.

Erfindungsgemäß wird diese Aufgabe gelöst durch eine Kupplungsscheibe für eine Reibungskupplung eines Fahrzeugs, umfassend eine axial elastische Belagträgeranordnung und an beiden axialen Seiten der Belagträgeranordnung jeweils eine Reibbelagsanordnung, wobei die Belagträgeranordnung eine die Reibbelagsanordnungen voneinander weg beaufschlagende Kraft bereitstellt, welcher eine mit zunehmender Drehzahl der Kupplungsscheibe zunehmende und dieser Kraft entgegenwirkende Kompensationskraft überlagert ist.

Durch eine drehzahlabhängig wirkende Kompensationskraft werden zwei einander entgegenwirkende Effekte überlagert, nämlich einmal die Abnahme des Reibkoeffizienten bei höherer Relativdrehzahl, also geringerer Absolutdrehzahl einer Kupplungsscheibe im Stillstand bzw. im Anfahrzustand, und andererseits die mit steigender Drehzahl, also geringer werdender Relativdrehzahl im Anfahrzustand ansteigende Kompensationskraft, welche faktisch eine Verringerung der Anpresskraft bewirkt. Auf diese Art und Weise wird es möglich, Schwankungen im Kupplungsmoment deutlich zu reduzieren.

Beispielsweise kann bei der erfindungsgemäßen Kupplungsscheibe vorgesehen sein, dass bei wenigstens einer der Reibbelagsanordnungen ein Massenschwerpunkt bezüglich eines Anbindungspunktes der Belagsträgeranordnung axial derart versetzt ist, dass bei Fliehkrafteinwirkung eine diese Reibbelagsanordnung in Richtung auf die andere Reibbelagsanordnung zu beaufschlagende Kraftkomponente generiert wird.

Alternativ oder zusätzlich ist es möglich, dass für wenigstens eine der Reibbelagsanordnungen eine Axialabstützanordnung vorgesehen ist, deren Axialabstützwirkung mit zunehmender Drehzahl der Kupplungsscheibe abnimmt. Um diesen Effekt der Beeinflussung der axialen Abstützungswirkung besonders wirksam nutzen zu können, wird weiterhin vorgeschlagen, dass die Axialabstützanordnung die beiden Reibbelagsanordnungen gegeneinander abstützt.

Die erfindungsgemäße Kupplungsscheibe kann so aufgebaut sein, dass die Belagträgeranordnung in Zuordnung zu jeder Reibbelagsanordnung eine Mehrzahl von radial innen bezüglich eines Nabenbereichs anzukoppelnden und radial außen die Reibbelagsanordnung tragenden Belagträgerelementen umfasst. Um dabei einen rotations- bzw. fliehkraftbedingten Einfluss im vorangehend beschriebenen Sinne in einfacher Weise bereitstellen zu können, wird vorgeschlagen, dass die Belagträgerelemente radial innen einen Ankopplungsbereich und radial außen einen Tragebereich aufweisen und dass der Tragebereich axial bezüglich des Ankopplungsbereichs in Richtung auf die zu tragende Reibbelagsanordnung zu versetzt ist.

Weiterhin kann vorgesehen sein, dass die Axialabstützanordnung jeweils axial einander gegenüber liegende Tragebereiche bezüglich einander abstützt.

Eine große Variabilität hinsichtlich der Ausgestaltung der Kompensationskraftwirkung wird erfindungsgemäß dadurch erhalten, dass die Reibbelagsanordnung jeweils eine Mehrzahl von in Umfangsrichtung aufeinander folgenden Reibbelagselementen umfasst, und dass bei wenigstens einem Teil der Reibbelagselemente wenigstens einer der Reibbelagsanordnungen die Kompensationskraft erzeugt wird.

Die vorliegende Erfindung betrifft ferner eine Reibungskupplung für ein Fahrzeug, umfassend eine Widerlagerplatte, eine Anpressplatte sowie wenigstens eine dazwischen klemmbare erfindungsgemäße Kupplungsscheibe.

Um diese Reibungskupplung in einen Einrückzustand bringen zu können, wird vorgeschlagen, dass die Anpressplatte durch eine bezüglich dieser und eines Kupplungsgehäuses abgestützte Kraftbeaufschlagungsanordnung in Richtung auf die Widerlagerplatte zu beaufschlagbar ist.

Weiter kann die Kraftbeaufschlagungsanordnung als Kraftspeicher, beispielsweise Membranfeder, ausgebildet sein und im Wesentlichen eine für die Reibungskupplung erforderliche Einrückkraft erzeugen. Bei einer alternativen Ausgestaltungsform kann vorgesehen sein, dass die Kraftbeaufschlagungsanordnung durch ein im Wesentlichen eine Einrückkraft für die Reibungskupplung erzeugendes Einrückkrafterzeugungssystem beaufschlagbar ist. Dies ist besonders daher vorteilhaft, da durch das definierte Bereitstellen einer Einrückkraft und das entsprechende Beaufschlagen der Kraftbeaufschlagungsanordnung eine sehr stabile axiale Fixierung der Anpressplatte erreicht werden kann und somit die Gefahr, dass auch die Anpressplatte in Schwingung versetzt wird, gemindert ist.

Die vorliegende Erfindung wird nachfolgend mit Bezug auf die beiliegenden Figuren anhand bevorzugter Ausgestaltungsformen detailliert beschrieben. Es zeigt:
- Fig. 1: im Längsschnitt den grundsätzlichen Aufbau einer Reibungskupplung;
- Fig. 2: ein Diagramm, das aufgetragen über einer Relativdrehzahl zwischen einer Kupplungsscheibe und einer Druckplatte bzw. einer Anpressplatte einer Reibungskupplung die Variation des Kupplungsmoments darstellt;
- Fig. 3: ein Diagramm, das über die Zeit hinweg bei einem Einkuppelvorgang das durch die relativdrehzahlabhängig auftretende Kupplungsmomentenvariation oszillierende Kupplungsmoment darstellt;
- Fig. 4: ein Diagramm, das aufgetragen über der Zeit die Drehzahl der Druckplattenbaugruppe und der Kupplungsscheibe zeigt;
- Fig. 5: ein Diagramm, das aufgetragen über der Zeit das Kupplungsmoment und das am Antriebsstrang anliegende Drehmoment zeigt;
- Fig. 6: im Teil-Längsschnitt und in Prinzipdarstellung eine erste Ausgestaltungsform einer erfindungsgemäßen Kupplungsscheibe;
- Fig. 7: eine der Fig. 6 entsprechende Ansicht einer alternativ ausgestalteten Kupplungsscheibe;
- Fig. 8: eine Axialansicht einer erfindungsgemäß aufgebauten Kupplungsscheibe;
- Fig. 9: ein der Fig. 2 entsprechendes Diagramm für eine erfindungsgemäße Kupplungsscheibe;
- Fig. 10: ein der Fig. 3 entsprechendes Diagramm für eine erfindungsgemäße Kupplungsscheibe;
- Fig. 11: ein Diagramm, das aufgetragen über der Zeit ein durch eine drehzahlabhängige Kompensationskraft generiertes oszillierendes Kupplungsmoment zeigt;
- Fig. 12: ein der Fig. 4 entsprechendes Diagramm für eine erfindungsgemäße Kupplungsscheibe;
- Fig. 13: ein der Fig. 5 entsprechendes Diagramm für eine erfindungsgemäße Kupplungsscheibe;
- Fig. 14: eine Druckplattenbaugruppe für eine Kupplung des Normal-Offen-Typs.

Die Prinzipien der vorliegenden Erfindung werden nachfolgend auch unter Bezugnahme auf den in Fig. 1 gezeigten und vorangehend bereits beschriebenen grundsätzlichen Aufbau einer Reibungskupplung dargelegt. Dabei ist dann die in Fig. 1 erkennbare Kupplungsscheibe 10 zu ersetzen durch eine Kupplungsscheibe, welche gemäß den Prinzipien der vorliegenden Erfindung aufgebaut ist.

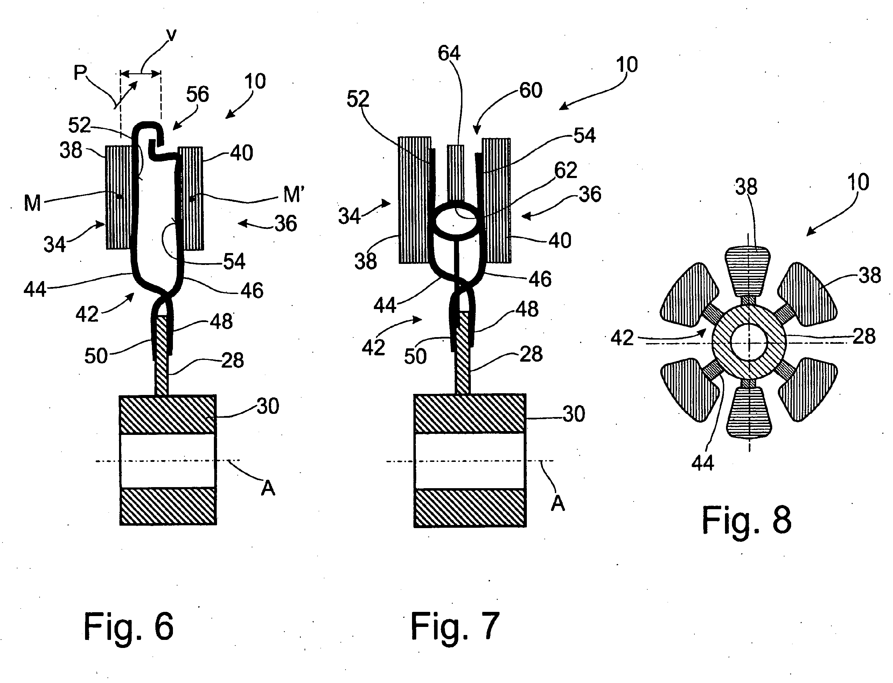

Eine erste derartige Ausgestaltungsform einer erfindungsgemäß aufgebauten Kupplungsscheibe 10 ist in Fig. 6 gezeigt. Man erkennt radial innen den Nabenbereich 30 mit dem nach radial außen greifenden ringartigen Träger 28, der hier eine radial etwas kürzere Ausgestaltung aufweist, als bei der in Fig. 1 erkennbaren Kupplungsscheibe.

Die Kupplungsscheibe 10 umfasst ferner zwei Reibbelagsanordnungen 34, 36, wobei beispielsweise die Reibbelagsanordnung 34 zur Reibwechselwirkung mit der Widerlagerplatte 14 vorgesehen ist, während die Reibbelagsanordnung 36 zur Reibwechselwirkung mit der Anpressplatte 20 vorgesehen sein kann. Obgleich die Reibbelagsanordnungen 34, 36 in Umfangsrichtung im Wesentlichen ununterbrochen durchgehende Ringe aus beispielsweise organischem Reibbelagsmaterial umfassen können, ist es für die Prinzipien der vorliegenden Erfindung vorteilhaft, wenn diese Reibbelagsanordnungen mit in Fig. 8 auch erkennbaren und in Umfangsrichtung aufeinander folgenden Reibbelagselementen 38 bzw. 40 ausgebildet sind.

Die beiden Reibbelagsanordnungen 34, 36 sind über eine Belagträgeranordnung 42 an den Nabenbereich 30 bzw. den daran vorgesehenen ringartigen Träger 28 angekoppelt. Beispielsweise in Zuordnung zu jedem Reibbelagselement der Reibbelagsanordnung 34 und der Reibbelagsanordnung 36 weist die Belagträgeranordnung 40 ein aus Federstahl oder dergleichen ausgebildetes Trägerelement 44 bzw. 46 auf. Die Trägerelemente 44, 46 weisen radial innen einen Kopplungsbereich 48, 50 auf, mit welchem sie bezüglich des Nabenbereichs 30 zu koppeln sind, also beispielsweise am ringartigen Träger 28 durch Vernietung oder dergleichen festzulegen sind. Weiter radial außen weisen die beiden Trägerelemente 44, 46 Tragebereiche 52, 54 auf, die im Wesentlichen planar und sich radial bezüglich einer Drehachse A erstreckend angeordnet sind und an welchen die Reibbelagselemente 38, 40 beispielsweise durch Verklebung oder Vernietung festgelegt sind.

Zwischen dem jeweiligen Kopplungsbereich 48, 50 und dem jeweiligen Tragebereich 52, 54 sind die Trägerelemente 44, 46 zweifach abgekröpft, so dass die Tragebereiche 52, 54 bezüglich den jeweils zugeordneten Kopplungsbereichen 48, 50 axial versetzt liegen. Dieser axiale Versatz ist derart gerichtet, dass ein jeweiliges Reibbelagselement 38, 40 bezüglich derjenigen axialen Positionierung, in welcher der Kopplungsbereich 48 bzw. 50 radial innen festgelegt ist, in Richtung des jeweiligen Reibbelagselements versetzt liegt. D.h., der Tragebereich 52 für ein Reibbelagselement 38 der Reibbelagsanordnung 34 wäre dann in Richtung auf die Widerlagerplatte 14 zu versetzt, betrachtet bezüglich des zugehörigen Kupplungsbereichs 38, während der Tragebereich 54 eines Reibbelagselements 40 der Reibbelagsanordnung 36 bezüglich des zugeordneten Kopplungsbereichs 50 dann in Richtung auf die Anpressplatte 20 zu versetzt wäre. Entsprechend versetzt liegt dann auch jeweils ein Massenschwerpunkt M bzw. M' einer Baugruppe, jeweils umfassend ein Reibbelagselement 38 oder 40 und ein zugehöriges Trägerelement 44 oder 46.

Im radial äußeren Bereich sind die Trägerelemente 44, 46 so geformt, dass sie eine gegenseitige Verhakung 56 bilden, so dass durch die Eigenelastizität der Trägerelemente 44, 46, diese mit ihren Tragebereichen 52, 54 grundsätzlich zwar bei Festlegung der Kopplungsbereiche 48, 50 bezüglich des Nabenbereichs 30 voneinander weg vorgespannt sind, eine gewisse maximale Entfernung aber nicht überschreiten können. Die Trägerelemente 44, 46 wirken daher grundsätzlich bei Durchführung von Einkuppelvorgängen bzw. auch Auskuppelvorgängen nach Art von Belagsfederungen, durch welche die an der Kupplungsscheibe vorgesehenen Reibbelagsanordnungen 34, 36 in Richtung voneinander weg und in Richtung auf die mit ihnen jeweils in Reibeingriff zu bringenden Baugruppen zu vorgespannt sind.

Durch den jeweils vorhandenen axialen Versatz der Massenschwerpunkte M bzw. M' bezüglich desjenigen Bereichs, in welchem ein jeweiliges Trägerelement 44, 46 festgelegt ist, entsteht im Rotationsbetrieb, also bei Drehung um die Drehachse A, eine Kraftwirkung, die im Folgenden anhand des in Fig. 6 links erkennbaren Reibbelagselements 38 und des zugeordneten Trägerelements 44 erläutert wird.

Man erkennt radial außen den Versatz V, welcher bei Fliehkrafteinwirkung und entsprechender am Massenschwerpunkt M angreifender, nach radial außen gerichteter Kraft zu einem Kippmoment führt. Auf Grund der Ankopplung radial innen führt dieses Moment zu einer Kraftwirkung, die näherungsweise in Richtung des Pfeils P wirkt. Die Folge davon ist, dass der Radialanteil dieser Kraft versucht, ein jeweiliges Reibbelagselement 38 nach radial außen zu ziehen, mit der Wirkung, dass durch die auf das zugehörige Trägerelement 44 entsprechend einwirkende Radialkraft dieses etwas gestreckt wird und insofern der axiale Versatz V abnimmt. Die Axialkomponente dieser Kraft führt ebenfalls zu einer Bewegung bzw. Beaufschlagung des Reibbelagselements 38 in einer Richtung, welche den Versatz V mindert. Beide Effekte führen also dazu, dass der durch die Federelastizität des Trägerelements 44 erzeugten Axialkraft, welche in der Darstellung der Fig. 6 nach links, also beispielsweise auf die Widerlagerplatte in Fig. 1 zu gerichtet ist, eine entsprechend entgegengesetzt gerichtete Kraft überlagert wird. Diese Kraft nimmt mit ansteigender Drehzahl und entsprechend ansteigender Fliehkraft zu. Selbstverständlich ist eine entsprechende Wirkung auch bei der anderen Reibbelagsanordnung 36 bzw. deren Reibbelagselementen 40 vorhanden.

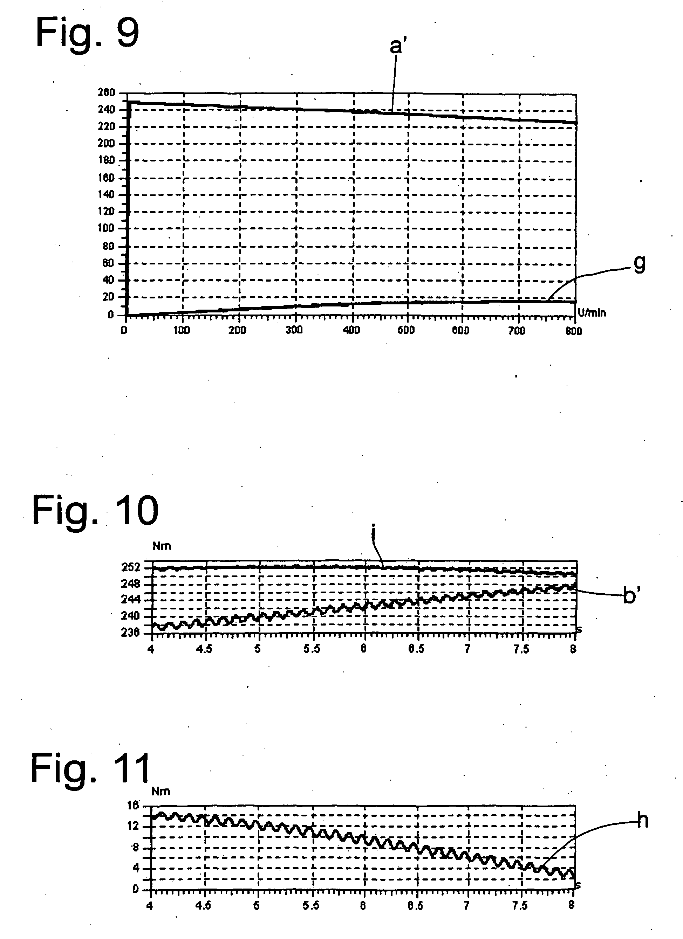

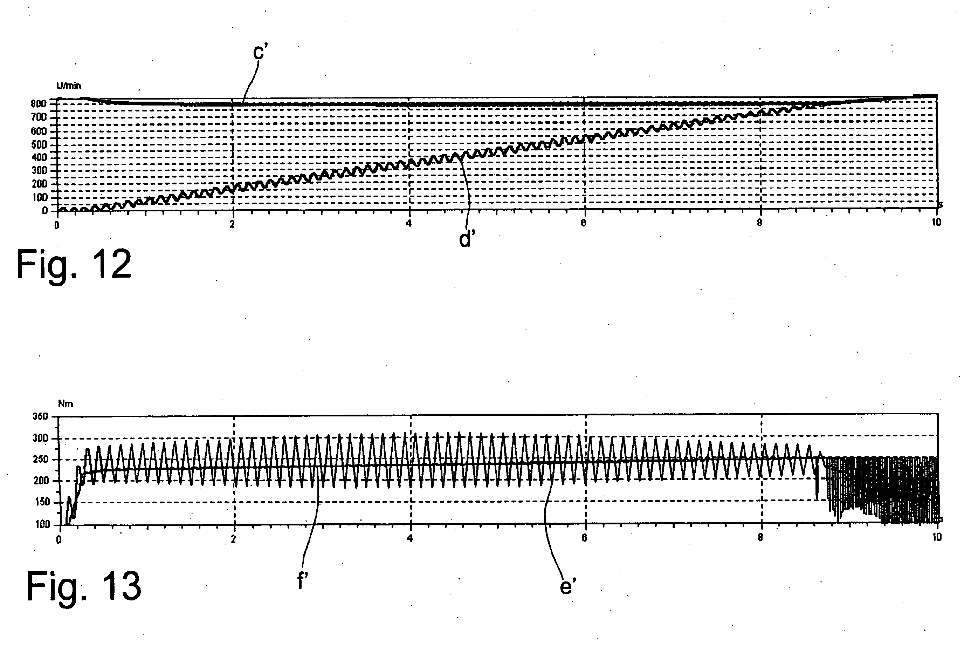

Die Wirkung dieser Fliehkraft bzw. drehzahlabhängig überlagerten Kraft wird nachfolgend mit Bezug auf die Fig. 9 bis 12 erläutert. Dabei erkennt man zunächst in Fig. 9 ein Diagramm, das demjenigen der Fig. 2 entspricht und aufgetragen über der Relativdrehzahl zwischen der Kupplungsscheibe 10 und der Widerlagerplatte 14 bzw. der Druckplatte 32 das vorangehend bereits erläuterte Kupplungsmoment a' zeigt, welches, wie bereits ebenfalls erläutert, mit zunehmender Relativdrehzahl und somit zunehmendem Schlupf sinkt. Hier sei noch einmal erläutert, dass eine zunehmende Relativdrehzahl bedeutet, dass im Anfahrzustand, also bei stehendem Fahrzeug und mithin nicht rotierender Kupplungsscheibe 10 die motorseitig angebundenen Bereiche der Reibungskupplung 12, also primär die Widerlagerplatte 14 und die Druckplattenbaugruppe 32, beispielsweise mit 800 Umdrehungen pro Minute drehen und dann während des Anfahrvorgangs durch das Einrücken der Kupplung und das allmähliche Beschleunigen des Fahrzeugs auch die Drehzahl der Kupplungsscheibe 10 zunimmt. Dies verdeutlicht auch die Kurve c in Fig. 4 bzw. c' in Fig. 12, welche die Drehzahl an der Eingangsseite der Reibungskupplung 12 bei etwa 800 Umdrehungen pro Minute veranschaulicht.

Eine zunehmende Drehzahl der Kupplungsscheibe 10 bewirkt, wie vorangehend mit Bezug auf die Fig. 6 dargelegt, eine zunehmende Kraftwirkung, welche der grundsätzlich vorhandenen Kraftwirkung der Belagträgeranordnung 42 entgegengerichtet ist und versucht, die jeweilige Reibbelagsanordnung 34 bzw. 36 in Richtung von der jeweils gegenüber liegenden Reibbaugruppe wegzuziehen. Ein mit einer derartigen Krafteinwirkung einhergehendes Kupplungsmoment ist in Fig. 9 mit der Kurve g veranschaulicht. Man erkennt, dass dieses durch die Kurve g veranschaulichte Moment bei einer maximalen Relativdrehzahl, also im Anfahrzustand beispielsweise nicht rotierender Kupplungsscheibe einen Ausgangswert von etwa 18 Nm hat und dann allmählich abnimmt. Diese allmähliche Abnahme ist dadurch begründet, dass mit zunehmender Drehzahl die vorangehend beschriebene Krafteinwirkung, welche die Reibbelagsanordnungen 34, 36 in Richtung von der gegenüber liegenden Reibbaugruppe wegzieht, stärker wird, so dass hier ein relativdrehzahlabhängiger Effekt generiert wird, der ausgehend von einem Zustand, in welchem das Fahrzeug steht, durch die mit der Fliehkraft zunehmende Kompensationskraft sich insofern spürbar macht, als die durch die Belagsträgeranordnung 42 mitgenerierte Anpresskraft geringfügig abnimmt, was selbstverständlich eine geringfügige Abnahme des Kupplungsmoments zur Folge hat. Diese mit ansteigender Drehzahl der Kupplungsscheibe 10 und mithin abnehmender Relativdrehzahl zunehmende Verringerung des Kupplungsmoments, generiert durch die ansteigende Kompensationskraft, ist nun zu überlagern mit der in Fig. 9 anhand der Kurve a' erkennbaren Zunahme des Kupplungsmoments unter dem Einfluss des Schlupfs, also der vorhandenen Relativdrehzahl.

Betrachtet man nun die beiden anhand der Kurven a' und g veranschaulichten Effekte, so bedeutet dies, dass dann, wenn die Relativdrehzahl zunimmt, zwar auf Grund der sinkenden Reibkoeffizienten das Kupplungsmoment gemindert wird, auf Grund der ebenfalls sinkenden Kompensationskraft gleichermaßen aber durch eine ansteigende Anpresskraft das Kupplungsmoment wieder erhöht wird. Dies ist in den Fig. 10 und 11 anhand der Kurven b' und h veranschaulicht. Die Kurve b' zeigt, wie im Falle der Fig. 3 die Kurve b, die über die Zeit hinweg auftretende Oszillation des Kupplungsmoments während eines Einkuppelvorgangs, während die Kurve h in Fig. 11 die exakt gegenphasige Oszillation zeigt, die durch die drehzahlabhängige Variation der auf die Reibbelagsanordnungen 34, 36 einwirkenden Kompensationskraft erzeugt wird. Dies führt zu einem Gesamtmoment, das in der Fig. 10 anhand der Kurve i repräsentiert ist und das, wie in Fig. 10 deutlich erkennbar, nahezu konstant ist.

Dieses nahezu konstante Kupplungsmoment führt zu einer deutlich geringeren Relativumfangsbewegung zwischen der Kupplungsscheibe 10 und der Widerlagerplatte 14 bzw. der Druckplattenbaugruppe 32, was sich auch in der in Fig. 12 erkennbaren Kurve d' manifestiert, in welcher die Drehzahl der Kupplungsscheibe 10 beginnend vom Stillstandzustand bei Durchführung eines Anfahrvorgangs aufgetragen ist. Dass hier also im Bereich der Reibungskupplung 12 wesentlich geringere Schwingungen, also Schwingungen mit deutlich geringerer Amplitude, im Idealfalle einer nahezu bei Null liegenden Amplitude, erzeugt werden, zeigt sich auch in dem am Antriebsstrang dann deutlich schwächer ausgeprägten Schwingungsverhalten. Insbesondere ist erkennbar, dass die Amplitude der im Antriebsstrang vorhandenen Schwingungen wesentlich geringer ausfällt, als im vorangehend mit Bezug auf die Fig. 5 geschilderten Falle, und vor allem in Richtung Ende des Anfahrvorgangs nicht zu einer Resonanzüberhöhung führt, sondern eine deutlich abnehmende Amplitude vorhanden ist. Dies führt dazu, dass beim Anfahrvorgang für Fahrzeuginsassen derartige Schwingungen im Antriebsstrang nahezu nicht mehr spürbar sind und überdies auch in den Antriebsstrang integrierte Komponenten durch die deutlich geringeren Schwingungsamplituden geringer belastet werden.

Eine alternative Ausgestaltungsform einer erfindungsgemäß aufgebauten Kupplungsscheibe ist in Fig. 7 gezeigt. Man erkennt hier, dass zwischen den Tragebereichen 52, 54 der Belagträgeranordnung 42 eine Abstützanordnung 60 vorgesehen ist, welche die Tragebereiche 52, 54 bzw. die Reibbelagsanordnungen 34, 36 in axialer Richtung bezüglich einander abstützt. Beispielsweise kann in Zuordnung zu jedem Paar aus einem Reibbelagselement 38 der Reibbelagsanordnung 34 und einem Reibbelagselement 40 der Reibbelagsanordnung 36 die Abstützanordnung 60 eine ringartig gestaltete Feder 62 umfassen, die an den Rückseiten der Tragebereiche 52, 54 angeordnet und mit diesen fest verbunden ist. Am Außenumfangsbereich dieser Feder 62 ist ein Fliehgewicht 64 vorgesehen, welches im Rotationsbetrieb mit zunehmender Drehzahl zunehmend nach radial außen zieht und dabei versucht, die Feder 62 in radialer Richtung zu strecken. Dabei nimmt die axiale Ausdehnung der Feder 62 ab, wodurch diese die Trägerelemente 44, 46 in ihrem jeweiligen Tragebereich 52, 54 aufeinander zu bewegt. Auch hier entsteht also eine Kraftwirkung, die der grundsätzlich durch die Trägerelemente 44, 46 erzeugten und in Richtung voneinander weg gerichteten Kraft entgegengerichtet ist, diese also mit zunehmender Drehzahl zunehmend kompensiert. Es wird also der gleiche Effekt erzeugt, wie vorangehend beschrieben. Bei zunehmender Drehzahl der Kupplungsscheibe 10 wird die die Reibbelagsanordnungen 34, 36 gegen die gegenüber liegenden Reibflächen pressende Kraft der Belagträgeranordnung 42 zunehmend kompensiert bzw. geschwächt, so dass eine höhere Drehzahl, die im Anfahrzustand einer geringeren Relativdrehzahl entspricht, zu einem auf Grund der geringeren Anpresskraft geminderten Kupplungsmoment führt, während gleichzeitig die geringere Relativdrehzahl zu einem größeren Reibkoeffizienten und einem dadurch bedingten Anstieg des Kupplungsmoments führt. Wie bereits dargelegt, ist die Auslegung im Idealfalle so, dass diese beiden Effekte sich näherungsweise kompensieren.

In Fig. 8 ist ein Beispiel einer erfindungsgemäßen Kupplungsscheibe 10 gezeigt, bei welcher jede der Reibbelagsanordnungen 36 Reibbelagselemente 38 (diese sind in Fig. 8 erkennbar) bzw. 40 aufweist. Diese sind einander paarweise zugeordnet und liegen im selben Umfangsbereich. Diese jeweiligen Paare von Reibbelagselementen 38 und 40 sind über die ebenfalls erkennbaren Trägerelemente 44 bzw. 46 am ringartigen Träger 28 getragen. Bei dieser Kupplungsscheibe 10 der Fig. 8 kann die Auslegung so sein, dass nur die beiden ganz oben bzw. ganz unten liegend erkennbaren Paare von Reibbelagselementen 38 bzw. 40 mit der in den Fig. 6 oder 7 erkennbaren Funktionalität ausgestaltet sind, also den mit zunehmender Drehzahl verstärkt auftretenden Kompensätionseffekt einführen, während dies bei den anderen Paaren von Reibbelagselementen 38 und 40 nicht der Fall ist. Auch auf diese Art und Weise wird es möglich, denjenigen Anteil der Reibbelagselemente, welcher in kompensierender Art und Weise wirksam wird, einzustellen und damit eine Abstimmung zu finden, auf die Variation des Reibkoeffizienten, die im Wesentlichen bei allen Reibbelagselementen in gleichem Maße auftreten wird.

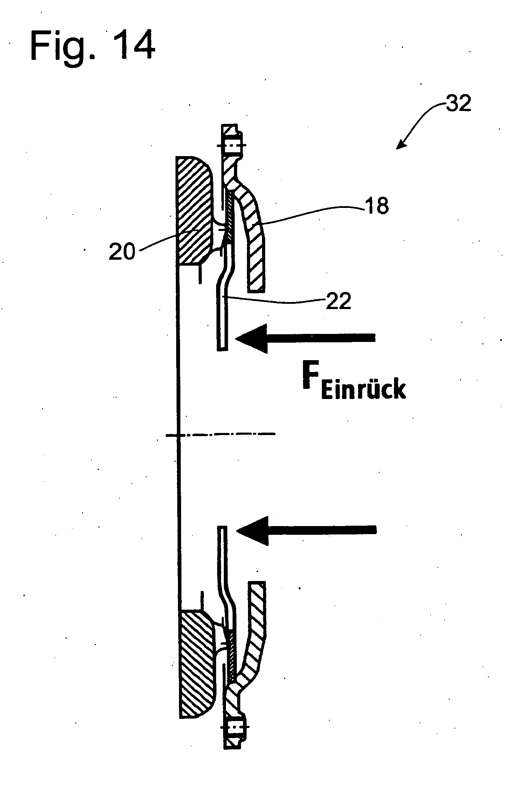

Der vorangehend beschriebene Effekt kann selbstverständlich in jedweder Reibungskupplung genutzt werden. Besonders wirksam ist dieser Effekt dann, wenn angenommen werden kann, dass bei Durchführung eines Einkuppelvorgangs, also beim Anfahren eines Fahrzeugs, die Anpressplatte nicht in axiale Schwingung versetzt wird, also eine definiert axiale Positionierung einnimmt. Dies kann in erster Ordnung auch angenommen werden, da die Masse der Anpressplatte 20 vergleichsweise groß ist und mithin die Anpressplatte nicht so leicht in Schwingung versetzt werden kann. Besonders vorteilhaft kann dieser Effekt jedoch genutzt werden, wenn, wie in Fig. 14 gezeigt, die Druckplattenbaugruppe 32 für eine Reibungskupplung des Normal-Offen-Typs ausgebildet ist. In diesem Falle ist die Kraftbeaufschlagungsanordnung 22 beispielsweise als Übertragungshebelanordnung gestaltet, die selbst keinen wesentlichen Kraftbeitrag liefert und die radial innen durch ein Einrückkrafterzeugungssystem, beispielsweise ein Nehmerzylinder oder dergleichen, zu beaufschlagen ist, um dadurch die Anpressplatte 20 in Richtung auf die Anpressplatte zu zu pressen. Auf diese Art und Weise kann nicht nur die Massenträgheit der Anpressplatte 20 selbst genutzt werden, sondern auch die durch das Einrückkrafterzeugungssystem bereitgestellte Trägheit, welche einer Oszillation der Anpressplatte 20 entgegenwirkt.

## Patentansprüche

1. Kupplungsscheibe für eine Reibungskupplung eines Fahrzeugs, umfassend eine axial elastische Belagträgeranordnung (42) und an beiden axialen Seiten der Belagträgeranordnung (42) jeweils eine Reibbelagsanordnung (34, 36), wobei die Reibbelagsanordnungen (34, 36) jeweils eine Mehrzahl von in Umfangsrichtung aufeinander folgenden Reibbelagselementen (38, 40) umfassen,
**dadurch gekennzeichnet, dass**
die Belagträgeranordnung (42) eine die Reibbelagsanordnungen (34, 36) voneinander weg beaufschlagende Kraft bereitstellt, welcher eine mit zunehmender Drehzahl der Kupplungsscheibe (10) zunehmende und dieser Kraft entgegenwirkende Kompensationskraft überlagert ist und dass bei wenigstens einem Teil der Reibbelagselemente (38, 40) wenigstens einer der Reibbelagsanordnungen (34, 36) die Kompensationskraft erzeugt wird.

2. Kupplungsscheibe nach Anspruch 1,
**dadurch gekennzeichnet, dass** bei wenigstens einer der Reibbelagsanordnungen (34, 36) ein Massenschwerpunkt (M, M')bezüglich eines Anbindungspunktes der Belagsträgeranordnung (42) axial derart versetzt ist, dass bei Fliehkrafteinwirkung eine diese Reibbelagsanordnung (34, 36) in Richtung auf die andere Reibbelagsanordnung (36, 34) zu beaufschlagende Kraftkomponente generiert wird.

3. Kupplungsscheibe nach Anspruch 1 oder 2,
**dadurch gekennzeichnet, dass** für wenigstens eine der Reibbelagsanordnungen (34, 36) eine Axialabstützanordnung (62) vorgesehen ist, deren Axialabstützwirkung mit zunehmender Drehzahl der Kupplungsscheibe (10) abnimmt.

4. Kupplungsscheibe nach Anspruch 3,
**dadurch gekennzeichnet, dass** die Axialabstützanordnung (62) die beiden Reibbelagsanordnungen (34, 36) gegeneinander abstützt.

5. Kupplungsscheibe nach einem der Ansprüche 1 bis 4,
**dadurch gekennzeichnet, dass** die Belagträgeranordnung (42) in Zuordnung zu jeder Reibbelagsanordnung (34, 36) eine Mehrzahl von radial innen bezüglich eines Nabenbereichs (30) anzukoppelnden und radial außen die Reibbelagsanordnung (34, 36) tragenden Belagträgerelementen (44, 46) umfasst.

6. Kupplungsscheibe nach Anspruch 5,
**dadurch gekennzeichnet, dass** die Belagträgerelemente (44, 46) radial innen einen Ankopplungsbereich (48, 50) und radial außen einen Tragebereich (52, 54) aufweisen und dass der Tragebereich (52, 54) axial bezüglich des Ankopplungsbereichs (48, 50) in Richtung auf die zu tragende Reibbelagsanordnung (34, 36) zu versetzt ist.

7. Kupplungsscheibe nach Anspruch 3 und einem der Ansprüche 5 oder 6,
**dadurch gekennzeichnet, dass** die Axialabstützanordnung (62) jeweils axial einander gegenüber liegende Tragebereiche (52, 54) bezüglich einander abstützt.

8. Reibungskupplung für ein Fahrzeug, umfassend eine Widerlagerplatte (14), eine Anpressplatte (20) sowie wenigstens eine dazwischen klemmbare Kupplungsscheibe (10) nach einem der vorangehenden Ansprüche.

9. Reibungskupplung nach Anspruch 8,
**dadurch gekennzeichnet, dass** die Anpressplatte (20) durch eine bezüglich dieser und eines Kupplungsgehäuses (18) abgestützte Kraftbeaufschlagungsanordnung (22) in Richtung auf die Widerlagerplatte (14) zu beaufschlagbar ist.

10. Reibungskupplung nach Anspruch 9,
**dadurch gekennzeichnet, dass** die Kraftbeaufschlagungsanordnung (22) als Kraftspeicher ausgebildet ist und im Wesentlichen eine Einrückkraft für die Reibungskupplung (10) erzeugt.

11. Reibungskupplung nach Anspruch 9,
**dadurch gekennzeichnet, dass** die Kraftbeaufschlagungsanordnung (22) durch ein im Wesentlichen eine Einrückkraft für die Reibungskupplung (10) erzeugendes Einrückkrafterzeugungssystem beaufschlagbar ist.

## Claims

1. Clutch disc for a friction clutch of a vehicle, comprising an axially elastic lining carrier arrangement (42) and in each case one friction lining arrangement (34, 36) on both axial sides of the lining carrier arrangement (42), with the friction lining arrangements (34, 36) comprising in each case a multiplicity of friction lining elements (38, 40) arranged in succession in the circumferential direction, **characterized in that** the lining carrier arrangement (42) provides a force which loads the friction lining arrangements (34, 36) away from one another and on which is superposed a compensation force which increases with increasing rotational speed of the clutch disc (10) and counteracts said force, and **in that** the compensation force is generated in at least a part of the friction lining elements (38, 40) of at least one of the friction lining arrangements (34, 36).

2. Clutch disc according to Claim 1,
**characterized in that,** in at least one of the friction lining arrangements (34, 36), a mass centre of gravity (M, M') is axially offset relative to a connecting point of the lining carrier arrangement (42) in such a way that, under the action of centrifugal force, a force component is generated which loads said friction lining arrangement (34, 36) in the direction of the other friction lining arrangement (36, 34).

3. Clutch disc according to Claim 1 or 2,
**characterized in that** an axial support arrangement (62) is provided for at least one of the friction lining arrangements (34, 36), the axial support action of which axial support arrangement (62) decreases with increasing rotational speed of the clutch disc (10).

4. Clutch disc according to Claim 3,
**characterized in that** the axial support arrangement (62) supports the two friction lining arrangements (34, 36) against one another.

5. Clutch disc according to one of Claims 1 to 4,
**characterized in that** the lining carrier arrangement (42) comprises a multiplicity of lining carrier elements (44, 46), one assigned to each friction lining arrangement (34, 36), for coupling radially at the inside with respect to a hub region (30), which lining carrier elements (44, 46) bear the friction lining arrangement (34, 36) radially at the outside.

6. Clutch disc according to Claim 5,
**characterized in that** the lining carrier elements (44, 46) have a coupling region (48, 50) radially at the inside and a bearing region (52, 54) radially at the outside, and **in that** the bearing region (52, 54) is offset axially relative to the coupling region (48, 50) in the direction of the friction lining arrangement (34, 36) to be borne.

7. Clutch disc according to Claim 3 and one of Claims 5 or 6,
**characterized in that** the axial support arrangement (62) supports in each case axially mutually oppositely situated bearing regions (52, 54) relative to one another.

8. Friction clutch for a vehicle, comprising a counter bearing plate (14), a pressure plate (20) and at least one clutch disc (10) according to one of the preceding claims which can be clamped in between said counter bearing plate (14) and pressure plate (20).

9. Friction clutch according to Claim 8,
**characterized in that** the pressure plate (20) can be acted on in the direction of the counter bearing plate (14) by means of a force-exerting arrangement (22) which is supported with respect to said pressure plate (20) and a clutch housing (18).

10. Friction clutch according to Claim 9,
**characterized in that** the force-exerting arrangement (22) is designed as a force store and substantially generates an engagement force for the friction clutch (10).

11. Friction clutch according to Claim 9,
**characterized in that** the force-exerting arrangement (22) can be acted on by means of an engagement-force-generating system which substantially generates an engagement force for the friction clutch (10).

## Revendications

1. Disque d'embrayage pour un embrayage à friction d'un véhicule, comprenant un agencement de support de garniture axialement élastique (42), et un agencement de garniture de friction (34, 36) respectif, des deux côtés axiaux de l'agencement de support de garniture (42), les agencements de garniture de friction (34, 36) comprenant à chaque fois une pluralité d'éléments de garniture de friction (38, 40) successifs dans la direction périphérique,
**caractérisé en ce que** l'agencement de support de garniture (42) fournit une force sollicitant les agencements de garniture de friction (34, 36) à l'écart l'un de l'autre, à laquelle s'ajoute une force de compensation qui s'accroît avec l'augmentation de la vitesse de rotation du disque d'embrayage (10) et agissant à l'encontre de cette force, et **en ce que** la force de compensation est générée dans le cas d'au moins une partie des éléments de garniture de friction (38, 40) d'au moins l'un des agencements de garniture de friction (34, 36).

2. Disque d'embrayage selon la revendication 1,
**caractérisé en ce que** dans le cas d' au moins l'un des agencements de garniture de friction (34, 36), un centre de gravité de masse (M, M') est décalé axialement par rapport à un point de raccordement de l'agencement de support de garniture (42) de telle sorte que lors de l'application de la force centrifuge, une composante de force sollicitant cet agencement de garniture de friction (34, 36) dans la direction de l'autre agencement de garniture de friction (36, 34) soit générée.

3. Disque d'embrayage selon la revendication 1 ou 2,
**caractérisé en ce que** pour au moins l'un des agencements de garniture de friction (34, 36), on prévoit un agencement de support axial (62) dont l'action de support axial diminue avec l'augmentation de la vitesse de rotation du disque d'embrayage (10).

4. Disque d'embrayage selon la revendication 3, **caractérisé en ce que** l'agencement de support axial (62) net en appui l'un contre l'autre les deux agencements de garniture de friction (34, 36).

5. Disque d'embrayage selon l'une quelconque des revendications 1 à 4, **caractérisé en ce que** l'agencement de support de garniture (42) comprend, en association avec chaque agencement de garniture de friction (34, 36), une pluralité d'éléments de support de garniture (44, 46) à accoupler radialement à l'intérieur par rapport à une région de moyeu (30) et portant radialement à l'extérieur l'agencement de garniture de friction (34, 36).

6. Disque d'embrayage selon la revendication 5,
**caractérisé en ce que** les éléments de support de garniture (44, 46) présentent radialement à l'intérieur une région d'accouplement (48, 50) et radialement à l'extérieur une région de support (52, 54), et **en ce que** la région de support (52, 54) est décalée axialement par rapport à la région d'accouplement (48, 50) dans la direction de l'agencement de garniture de friction (34, 36) à supporter.

7. Disque d'embrayage selon la revendication 3 et l'une quelconque des revendications 5 ou 6,
**caractérisé en ce que** l'agencement de support axial (62) net en appui l'une contre l'autre des régions de support (52, 54) situées à chaque fois axialement en face l'une de l'autre.

8. Embrayage à friction pour un véhicule, comprenant une plaque de butée (14), une plaque de pressage (20) ainsi qu'au moins un disque d'embrayage (10) pouvant être serré entre elles, selon l'une quelconque des revendications précédentes.

9. Embrayage à friction selon la revendication 8,
**caractérisé en ce que** la plaque de pressage (20) peut être sollicitée dans la direction de la plaque de butée (14) par un agencement de sollicitation de force (22) supporté par rapport à celle-ci et par rapport à un boîtier d'embrayage (18).

10. Embrayage à friction selon la revendication 9,
**caractérisé en ce que** l'agencement de sollicitation de force (22) est réalisé sous forme d'accumulateur de force et produit essentiellement une force d'embrayage pour l'embrayage à friction (10).

11. Embrayage à friction selon la revendication 9,
**caractérisé en ce que** l'agencement de sollicitation de force (22) peut être sollicité par un système de génération de force d'embrayage produisant essentiellement une force d'embrayage pour l'embrayage à friction (10).
